# EUROPÄISCHE PATENTANMELDUNG

(11) **EP 1 329 641 A1**
(43) Veröffentlichungstag der Anmeldung: **23.07.2003**
(21) Anmeldenummer: 02001404.9
(22) Anmeldetag: 21.01.2002
(51) Int. Cl.: F16B 45/00, F16B 21/02

(54) **Haken zum Anschlagen eines Hebezeugs an einem Container**

(71) Anmelder: Palfinger Hebetechnik GmbH, 5101 Bergheim (AT)
(72) Erfinder: Essl, Herbert, 5222 Munderfing (DE)
(74) Vertreter: Hofinger, Stephan

(57) **Zusammenfassung**

Haken zum Anschlagen eines Hebezeugs an einem Container oder dergleichen, wobei das Eingriffsende des Hakens einen eine langlochförmige Aufnahmeöffnung im Container durchsetzenden, im Querschnitt nockenförmigen Hals (3) sowie eine hammerkopfartige Abschlußplatte (4) aufweist.

## Beschreibung

Die vorliegende Erfindung betrifft einen Haken zum Anschlagen eines Hebezeugs an einem Container oder dergleichen, wobei das Eingriffsende des Hakens einen eine langlochförmige Aufnahmeöffnung im Container durchsetzenden Hals sowie eine hammerkopfartige Abschlußplatte aufweist.

Beim Anschlagen eines derartigen Hakens an einem Container wird das Eingriffsende des Hakens durch eine der standardisierten langlochförmigen Aufnahmeöffnungen im Container geführt, sodaß im eingeführten Zustand der Hals an der Innenkontur der Aufnahmeöffnung anliegt. Da die hammerkopfartige Abschlußplatte in ihrer Form im wesentlichen mit der langlochförmigen Aufnahmeöffnung übereinstimmt, kann durch Schrägstellung des Hakens ein unbeabsichtigtes Herausrutschen des Eingriffsendes des Hakens aus der Aufnahmeöffnung vermieden werden. Um die Haken universell einsetzen zu können, wurde ihr Hals bisher immer mit rundem Querschnitt ausgebildet, sodaß unabhängig von der Anordnung am Container ein Verschwenken des Hakens gegenüber der Aufnahmeöffnung möglich war. Dies führte jedoch dazu, daß der maximale Durchmesser des runden Halses nicht größer sein durfte als die Breite des Langloches der Aufnahmeöffnung. Die maximale Tragfähigkeit der Containerhaken war damit begrenzt.

Aufgabe der vorliegenden Erfindung war es daher, den Hals des Hakens im Sinne einer Steigerung der Tragfähigkeit umzugestalten.

Erfindungsgemäß ist nunmehr vorgesehen, daß der Hals einen nockenförmigen Querschnitt aufweist.

Aufgrund des Umstiegs von der Kreisform zur erfindungsgemäßen Nockenform konnte eine Steigerung der Tragfähigkeit erzielt werden. Ebenso kann bei gleichbleibender Tragfähigkeit ein billigeres Material für den Containerhaken verwendet werden, da durch die Nockenform die geringere Festigkeit des billigeren Materials ausgeglichen wird. Die Verschwenkbarkeit des Hakens gegenüber der Aufnahmeöffnung ist durch die Nockenform allerdings eingeschränkt.

Um die Sicherheit des Hakens zu erhöhen, kann deshalb vorzugsweise vorgesehen sein, daß die Hauptachse der hammerkopfartigen Abschlußplatte und die Hauptachse des Halses einen Winkel von 10° bis 30°, vorzugsweise von etwa 20° einschließen. Die schräge Anordnung bewirkt, daß der Verschwenkwinkel des Hakens gegenüber der Aufnahmeöffnung in einer Drehrichtung vergrößert wird. Da die Vergrößerung des Verschwenkwinkels in einer Drehrichtung mit einer Verringerung des Verschwenkwinkels in der anderen Drehrichtung einhergeht, werden die Haken paarweise für den Einsatz an gegenüberliegenden Stellen am Container angeboten, wobei der Winkel der Hauptachsen einmal positiv und einmal negativ ist.

Weitere Merkmale und Einzelheiten der vorliegenden Erfindung ergeben sich aus der nachfolgenden Figurenbeschreibung. Dabei zeigt:
Fig. 1 einen erfindungsgemäßen Haken mit gegen den Uhrzeigersinn verdreht angeordnetem, nockenförmigem Hals,
Fig. 2 einen erfindungsgemäßen Haken mit im Uhrzeigersinn verdreht angeordnetem, nockenförmigem Hals,
Fig. 3 eine Seitenansicht des Hakens,
Fig. 4 einen Schnitt entlang der Linie A - A in Fig. 3 und
Fig. 5 eine Vorderansicht des Hakens.

Der erfindungsgemäße Haken besteht aus einem in Querschnitt U-förmigen Grundkörper 1, der Öffnungen 2 zum Einsetzen eines Bolzens aufweist. An diesem Bolzen kann das Hebezeug angehängt werden. Die Form des Grundkörpers 1 ist jedoch für die vorliegende Erfindung völlig nebensächlich. Vorstellbar sind neben der gezeigten Ausführungsform auch als Ösen gestaltete Grundkörper, wie sie aus dem Stand der Technik bekannt sind.

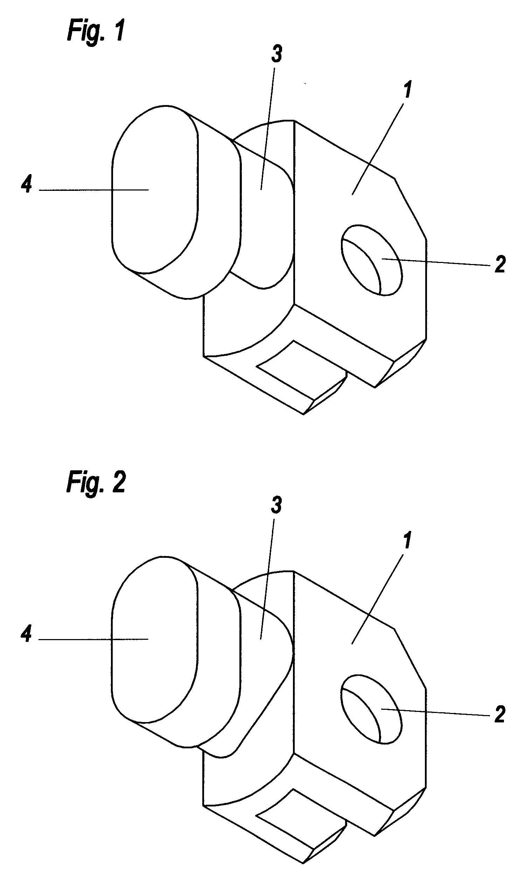

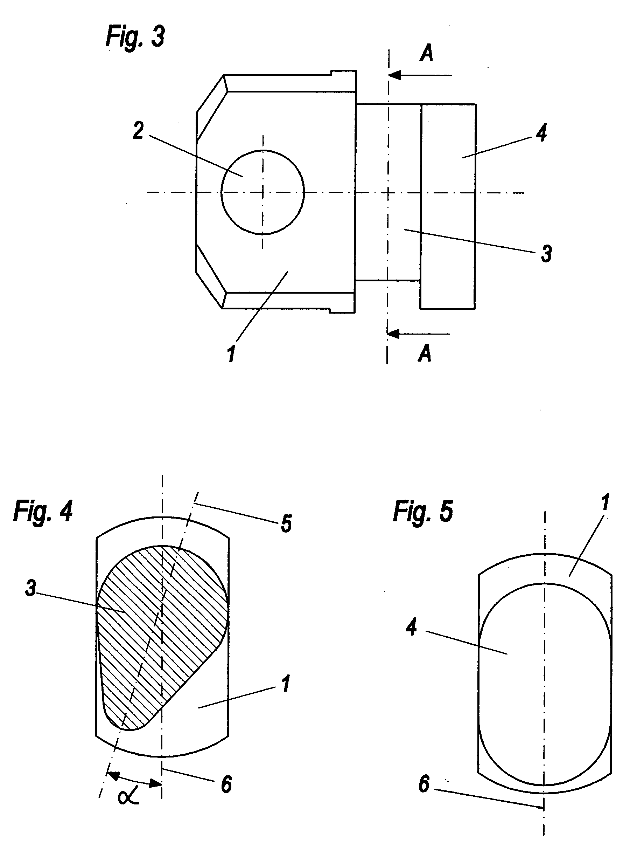

Wesentlich für die vorliegende Erfindung ist die Form des Halses 3, an den eine hammerkopfartige Abschlußplatte 4 anschließt. Wie am besten aus Fig. 4 ersichtlich, weist der Hals 3 einen nockenförmigen Querschnitt auf, der bezüglich seiner Hauptachse 5 symmetrisch ist. Die Hauptachse 5 des Halses 3 ist jedoch um den Winkel ∝ von etwa 20° gegenüber der Hauptachse 6 der Abschlußplatte 4 bzw. des Grundkörpers 1 verdreht. Fig. 4 stellt somit einen zu Fig. 2 passenden Querschnitt dar, wogegen der Winkel ∝ bei einem Schnitt durch Fig. 1 entgegengesetzt wäre. Die erfindungsgemäßen Haken werden immer paarweise eingesetzt, wobei je nach Zugrichtung jener Haken verwendet wird, der eine größere Verschwenkung des Hakens und der Abschlußplatte 4 gegenüber dem Langloch erlaubt, sodaß ein unbeabsichtigtes Lösen des Hakens vermieden wird.

Die hammerkopfartige Abschlußplatte 6 entspricht in ihrer Formgebung im wesentlichen dem (nicht gezeigten) Langloch im Container, der mittels der erfindungsgemäßen Haken befördert werden soll.

## Patentansprüche

1. Haken zum Anschlagen eines Hebezeugs an einem Container oder dergleichen, wobei das Eingriffsende des Hakens einen eine langlochförmige Aufnahmeöffnung im Container durchsetzenden Hals sowie eine hammerkopfartige Abschlußplatte aufweist, **dadurch gekennzeichnet, daß** der Hals (3) einen nackenförmigen Querschnitt aufweist.

2. Haken nach Anspruch 1, **dadurch gekennzeichnet, daß** die Hauptachse (6) der hammerkopfartigen Abschlußplatte (4) und die Hauptachse (5) des Halses (3) einen Winkel (∝) von 15° bis 25°, vorzugsweise von etwa 20° einschließen.

3. Haken nach Anspruch 1 oder 2, **dadurch gekennzeichnet, daß** der Querschnitt des Halses (3) bezüglich seiner Hauptachse (5) symmetrisch ausgestaltet ist.
